# EUROPÄISCHE PATENTSCHRIFT

(11) **EP 1 766 743 B1**
(45) Veröffentlichungstag und Bekanntmachung des Hinweises auf die Patenterteilung: **17.08.2011**
(21) Anmeldenummer: 05758396.5
(22) Anmeldetag: 18.06.2005
(51) Int. Cl.: H02G 3/04, H02B 1/00

(54) **SAMMELSCHIENENSYSTEM MIT MONTAGEEINHEIT AUS GRUNDPLATTE UND BEFESTIGUNGSTEILEN**
BUS BAR SYSTEM WITH ASSEMBLY UNIT CONSISTING OF A BASE PLATE AND FIXING ITEMS
SYSTEME A BARRES OMNIBUS AVEC UNITE DE MONTAGE FORMEE D'UNE PLAQUE DE BASE ET D'ELEMENTS DE FIXATION

(30) Priorität: 01.07.2004 DE 102004031825
(43) Veröffentlichungstag der Anmeldung: 28.03.2007
(73) Patentinhaber: RITTAL GmbH & Co. KG, 35745 Herborn (DE)
(72) Erfinder: WAGENER, Hans, 35716 Dietzhölztal (DE)
(74) Vertreter: Tönhardt, Marion
(86) Internationale Anmeldenummer: PCT/EP2005/006595
(87) Internationale Veröffentlichungsnummer: WO 2006/002786

(56) Entgegenhaltungen:
- DE-A- 3 937 371
- FR-A- 2 593 973
- US-A- 5 817 977

## Beschreibung

Die Erfindung betrifft ein Sammelschienensystem mit einer Montageeinheit aus Grundplatte mit Seitenschenkeln und Befestigungsteilen, die mit der Montageeinheit verbunden sind, wobei die Montageeinheit eine Aufnahme für Sammelschienenhalter und Sammelschienen bildet, die mittels Abdeckungen und/oder Adapter für Anschlussgeräte abgedeckt sind, wobei die Abdeckungen und/oder Adapter mittels Steck- und/oder Rastaufnahmen mit der Montageeinheit mechanisch und die Adapter zusätzlich elektrisch mit den Sammelschienen verbunden sind.

Derartige Sammelschienensysteme sind aus der EP 0 926 790 A3, der EP 0 926 791 A3 und der DE 93 06 013 U1 bekannt. Dabei bestimmt die Herstellung der Montageeinheit aus Montageplatte mit Befestigungsteilen entscheidend die Kosten für das Sammelschienensystem. Aus diesen Gründen ist schon versucht worden, die Kosten dadurch zu reduzieren, dass die Grundplatte mit den Befestigungsteilen einstückig zusammengefasst wurden. Dies bedingt komplizierte Werkzeuge und schließt die Herstellung als abgelängter Abschnitt eines Profilstranges in der Regel aus Kostengründen aus.

Weitere Versuche einer Kostenreduzierung verwenden für die Montageeinheit eine Grundplatte, die einfacher ausgebildet und mit separat hergestellten Befestigungsteilen verbunden werden kann. Dabei ist aber immer noch ein erheblicher Montageaufwand erforderlich, da die Befestigungsteile über die gesamte Länge des Sammelschienensystems mit der Grundplatte zu verbinden sind und an jeder Längsseite der Grundplatte ein Befestigungsteil anzubringen ist.

Ein Sammelschienensystem gemäss dem Obergriff des Anspruchs 1 ist aus der DE 39 37 371 A1 bekannt.

Es ist Aufgabe der Erfindung, bei einem Sammelschienensystem der eingangs erwähnten Art die Herstellkosten für die Montageeinheit dadurch wesentlich zu reduzieren, dass Grundplatte und Befestigungsteil als einfache Teile hergestellt und durch einfachste Montage miteinander verbunden werden können, ohne dabei die an die Montageeinheit gestellten Anforderungen zu beeinträchtigen.

Diese Aufgabe wird nach der Erfindung dadurch gelöst, dass die Montageeinheit mit an den Außenseiten der Seitenschenkel abstehenden, beabstandeten Halteflanschen und Befestigungsflanschen Rastaufnahmen bilden, in die bügelförmige Befestigungsteile einsteck- und/oder einrastbar sind, wobei die Steck- und/oder Rastaufnahmen der Abdeckungen und/oder Adapter die Halteflansche und die damit verbundenen Seitenschenkel der bügelförmigen Befestigungsteile aufnehmen.

Ein erster Vorteil besteht darin, dass beide Teile - die Grundplatte und das Befestigungsteil - als einfache Strangpressprofile hergestellt und in der gewünschten Länge abgelängt werden können. Für beide Längsseiten der Grundplatte kann das identische Befestigungsteil verwendet werden, wenn es um 180° verdreht montiert wird. Die Abdeckungen und die Geräte-Adapter können mit den Steck- und/ oder Rastaufnahmen unverändert übernommen werden, wenn die Halteflansche der Grundplatte mit den verbundenen Seitenschenkel der Befestigungsteile als Gegenelemente für die Steck- und/oder Rastaufnahmen der Abdeckungen und/oder Adapter ausgelegt sind.

Die Rastverbindung zwischen der Grundplatte und dem Befestigungsteil ist dadurch gebildet, dass die den Befestigungsflanschen der Montageplatte zugekehrten Seitenschenkel der Befestigungsteile einen Rastzahn tragen, der in eine Rastaufnahme der anliegenden Oberseite des Befestigungsflansches der Grundplatte einrastet.

Die Befestigungsteile werden dadurch vorläufig in der Aufnahme der Grundplatte fixiert, dass die der Grundplatte beabstandeten Halteflansche an den freien Enden zu der Grundplatte hin gerichtete Rastschenkel aufweisen, die auf den den Außenseiten der Seitenschenkel zugekehrten Seiten mit Steckaufnahmen für die als Steckspitzen ausgebildeten Enden der Seitenschenkel der Befestigungsteile versehen sind.

Nach der Fixierung lässt sich die Rastverbindung leicht erreichen, wenn vorgesehen ist, dass der Rastzahn am Seitenschenkel des Befestigungsteils in Einsteckund/oder Einrastrichtung kontinuierlich ansteigende Dicke aufweist und in eine in dieser Richtung mit abnehmender Tiefe versehene Rastaufnahme in der zugekehrten Oberseite des Befestigungsflansches der Grundplatte einrastet.

Die Rastendstellung der Befestigungsteile in den Aufnahmen der Grundplatte werden nach einer Weiterbildung dadurch noch festgelegt, dass die den Befestigungsflanschen der Grundplatte zugekehrten Seitenschenkel der Befestigungsteile einen Anschlagabschnitt aufweisen, der bei eingestecktem und/oder eingerastetem Befestigungsteil an der Stirnseite des Befestigungsflansches anschlägt und die Einsteck- und/oder Einrastbewegung beendet, sowie dass die eingesteckten und/oder eingerasteten Befestigungsteile mit einem Anlageschenkel an den Außenseiten der Seitenschenkel der Grundplatte anliegen und dass der Anlageschenkel die Seitenschenkel des Befestigungsteils miteinander verbindet.

Ist nach einer Weiterbildung vorgesehen, dass die Anschlagabschnitte der Befestigungsteile in Verlängerungsabschnitte übergehen, die sich an die Befestigungsflansche der Grundplatte anschließen und mit deren äußeren Befestigungsseite bündig abschließen, dann können die Verlängerungsabschnitte der Befestigungsteile zur Befestigung der Montageeinheit auf einer Befestigungsfläche verwendet werden.

Die Erfindung wird anhand eines in den Zeichnungen dargestellten Ausführungsbeispiels näher erläutert. Es zeigen:
- Fig. 1: im Querschnitt eine aus Grundplatte und zwei Befestigungsteilen zusammengesetzte Montageeinheit, die mit einer Abdeckung abge- deckt ist,
- Fig. 2: in vergrößertem Teilquerschnitt die Verbindung von Grundplatte und Befestigungsteil an der linken Längsseite der Montageeinheit nach Fig. 1, wobei die Anbringung der Abdeckung mit dargestellt ist, und
- Fig. 3: in vergrößertem Teilschnitt die Verbindung von Grundplatte und Befe- stigungsteil an der rechten Längsseite der Montageeinheit nach Fig. 1 mit Anbringung der Abdeckung oder eines Adapters.

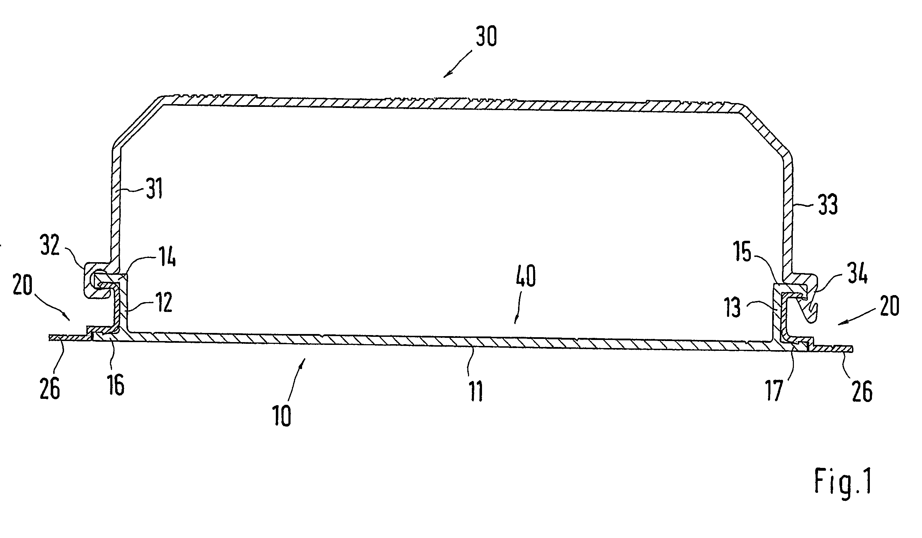

Wie der Querschnitt nach Fig. 1 zeigt, bildet die Grundplatte 11 mit den beiden nach oben weisenden Seitenschenkeln 12 und 13 in bekannter Weise eine Aufnahme 40, die sich über eine bestimmte Länge fortsetzt. Diese Grundplatte 11 wird mit den Seitenschenkeln 12 und 13 sowie den an den Außenseiten der Seitenschenkeln 12 und 13 abstehenden Halteflanschen 14 und 15 sowie Befestigungsflanschen 16 und 17 als Abschnitt in der gewünschten Länge von einem Profilstrang abgelängt.

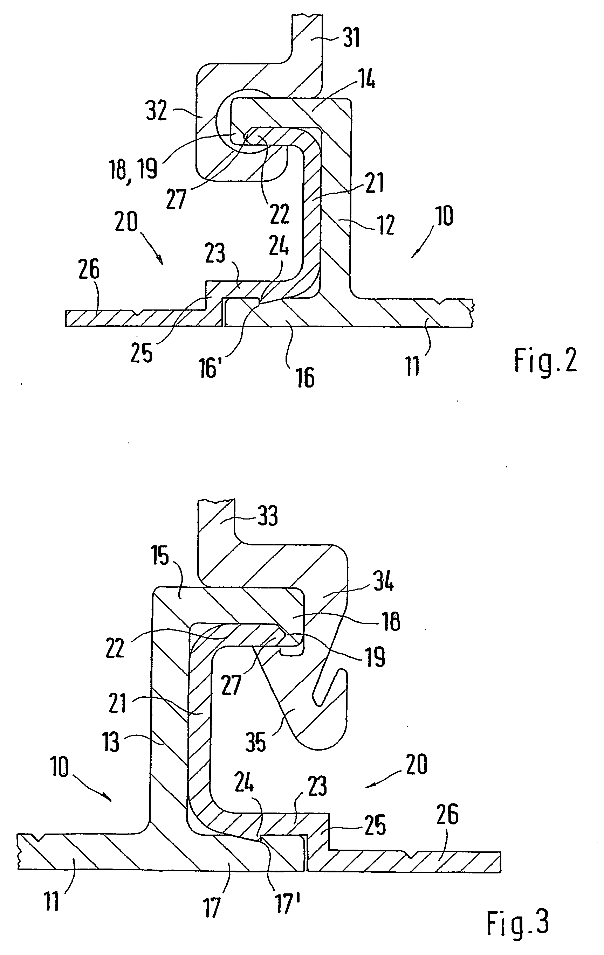

In die Aufnahme 40 werden zweiteilige Sammelschienenhalter eingebracht, in denen Sammelschienen festgelegt sind. Diese Einheit aus Sammelschienen und Sammelschienenhalter wird in bekannter Weise in die Aufnahme 40 der Montageeinheit 10 eingesetzt und darin festgelegt. Auf die Einzelheiten der Festlegung braucht daher im Rahmen der vorliegenden Erfindung nicht eingegangen werden. Neu ist bei der Montageeinheit 10 die Anbringung der beiden Befestigungsteile 20 an den beiden Längsseiten der Grundplatte 10, auf die bei der Beschreibung der Teilquerschnitte nach Fig. 2 und 3 näher eingegangen wird.

In der Fig. 1 ist noch zu erwähnen, dass die mit den Seitenschenkeln 12 und 13 verbundenen Befestigungsteile 20 mit Verlängerungsabschnitten 26 die Befestigungsflansche 16 und 17 der Grundplatte 11 verlängern und zur Befestigung der Montageeinheit 10 auf einer Befestigungsfläche verwendet werden können. Daher schließen diese Verlängerungsabschnitte 26 der Befestigungsteile 20 auch mit der Unterseite der Grundplatte 11 bündig ab.

Wie der Teilquerschnitt nach Fig. 2 erkennen lässt, bilden der Halteflansch 14 und der Befestigungsflansch 16 an dem Seitenschenkel 12 der Grundplatte 11 eine rechteckförmige Aufnahme auf der Außenseite des Seitenschenkels 12. In diese Aufnahme wird ein bügelförmiges Befestigungsteil 20 eingesteckt und eingerastet. Der Halteflansch 14 ist am Ende mit einem zum Befestigungsflansch 16 gerichteten Rastschenkel 18 versehen, der auf der dem Seitenschenkel 12 zugekehrten Innenseite mit einer Steckaufnahme 19 versehen ist. In diese Steckaufnahme 19 wird die am Ende des Seitenschenkels 22 des Befestigungsteils 20 ausgebildete Steckspitze 27 eingeführt. Dann wird der Seitenschenkel 23 mehr und mehr in die Aufnahme der Grundplatte 10 eingeschwenkt, wobei der Seitenschenkel 23 des Befestigungsteils 20 auf der Oberseite des Befestigungsflansches 16 gleitet, bis der am Seitenschenkel 23 angeformte Rastzahn 24 in die Rastaufnahme 16' des Befestigungsflansches 16 einrastet und das vorgesteckte Befestigungsteil 20 endgültig festlegt. Der Rastzahn 24 nimmt in der Einsteck- und Einrastrichtung in der Dicke zu, während die Rastaufnahme 16' in derselben Richtung in der Tiefe abnimmt. Diese Ausbildungen des Rastzahnes 24 und der Rastaufnahme 16' sichern einen eindeutigen Halt des Befestigungsteils 20 an der Grundplatte 11.

Es kommt noch hinzu, dass die Einsteck- und/oder Einrastbewegung durch einen Anschlagabschnitt 25 am Seitenschenkel 23 des Befestigungsteils 20 begrenzt wird, wenn dieser an der Stirnseite des Befestigungsflansches 16 anschlägt. Gleichzeitig legt sich der Anlageschenkel 21 an die Außenseite des Seitenschenkels 12 an, wie die Endstellung nach Fig. 2 verdeutlicht.

Mit 31 ist der Seitenschenkel einer Abdeckung 30 gezeigt, der in eine Steckaufnahme 32 ausläuft. Die Eingangsöffnung dieser Steckaufnahme 32 ist an die Abmessung des Halteflansches 14 mit eingestecktem Seitenschenkel 22 des Befestigungsteils 20 abgestimmt. Ist die Steckaufnahme 32 vorgegeben, dann wird der Halteflansch 14 mit dem Seitenschenkel 22 an die Steckaufnahme 32 angepasst. Die neue Montageeinheit 10 kann dann für bestehende Sammelschienensysteme mit Abdeckungen und Adaptern angepasst werden.

In gleicher Weise kann ein identisches Befestigungsteil 20 an der rechten Längsseite der Grundplatte 11 mit dem Seitenschenkel 13 befestigt werden. Der Halteflansch 15 des Seitenschenkels 13 ist am Ende mit dem Rastschenkel 18 versehen, der wiederum die Steckaufnahme 19 trägt und die Rastspitze 27 am Ende des Seitenschenkels 22 des Befestigungsteils 20 aufnimmt und fixiert. Der Rastzahn 24 des Befestigungsteils 20 rastet in eine Rastaufnahme 17' des Befestigungsflansches 17 der Grundplatte 11 ein. Der Anschlagabschnitt 25, der Anlageschenkel 21 und der Verlängerungsabschnitt 26 des Befestigungsteils 20 übernehmen dieselben Funktionen wie bei der Verbindung auf der linken Längsseite der Montageeinheit 10.

Der Seitenschenkel 33 der Abdeckung 30 oder die entsprechende Seite des Adapters läuft in eine Rastaufnahme 34 aus, die in ihrer Ausbildung bekannt ist.
Ein angeformtes Teil der Rastaufnahme 34 bildet eine Rastschräge 35, so dass die Abdeckung 30 oder der Adapter nach hergestellter linker Steckverbindung mit der Steckaufnahme 32 auf der rechten Seite von oben auf den Halteflansch 22 mit eingestecktem Seitenschenkel 22 des Befestigungsteils 20 auf der rechten Seite aufgerastet werden kann.

## Patentansprüche

1. Sammelschienensystem mit einer Montageeinheit (10) aus Grundplatte (11) mit Seitenschenkeln (12, 13) und Befestigungsteilen (20), die mit der Montageeinheit (10) verbunden sind, wobei die Montageeinheit (10) eine Aufnahme für Sammelschienenhalter und Sammelschienen bildet, die mittels Abdeckungen (30) und/oder Adapter für Anschlussgeräte abgedeckt sind, wobei die Abdeckungen (30) und/oder Adapter mittels Steck- und/oder Rastaufnahmen (32, 34) mit der Montageeinheit (10) mechanisch und die Adapter zusätzlich elektrisch mit den Sammelschienen verbunden sind,
**dadurch gekennzeichnet,**
**dass** die Montageeinheit (10) mit an den Außenseiten der Seitenschenkel (12, 13) abstehenden, beabstandeten Halteflanschen (14, 15) und Befestigungsflanschen (16, 17) Rastaufnahmen bilden, in die bügelförmige Befestigungsteile (20) einsteck- und/oder einrastbar sind, wobei die Steckund/oder Rastaufnahmen (32, 34) der Abdeckungen und/oder Adapter (30) die Halteflansche (14, 15) und die damit verbundenen Seitenschenkel (22) der bügelförmigen Befestigungsteile (20) aufnehmen.

2. Sammelschienensystem nach Anspruch 1,
**dadurch gekennzeichnet,**
**dass** die den Befestigungsflanschen (16, 17) der Montageplatte (11) zugekehrten Seitenschenkel (23) der Befestigungsteile (20) einen Rastzahn (24) tragen, der in eine Rastaufnahme (16', 17') der anliegenden Oberseite des Befestigungsflansches (16, 17) der Grundplatte (11) einrastet.

3. Sammelschienensystem nach Anspruch 2,
**dadurch gekennzeichnet,**
**dass** der Rastzahn (24) am Seitenschenkel (23) des Befestigungsteils (20) in Einsteck- und/oder Einrastrichtung kontinuierlich ansteigende Dicke aufweist und in eine in dieser Richtung mit abnehmender Tiefe versehene Rastaufnahme (16', 17') in der zugekehrten Oberseite des Befestigungsflansches (16, 17) der Grundplatte (11) einrastet.

4. Sammelschienensystem nach einem der Ansprüche 1 bis 3,
**dadurch gekennzeichnet,**
**dass** die der Grundplatte (11) beabstandeten Halteflansche (14, 15) an den freien Enden zu der Grundplatte (11) hin gerichtete Rastschenkel (18) aufweisen, die auf den den Außenseiten der Seitenschenkel (12, 13) zugekehrten Seiten mit Steckaufnahmen (19) für die als Steckspitzen (27) ausgebildeten Enden der Seitenschenkel (22) der Befestigungsteile (20) versehen sind.

5. Sammelschienensystem nach einem der Ansprüche 1 bis 4,
**dadurch gekennzeichnet,**
**dass** die den Befestigungsflanschen (16, 17) der Grundplatte (11) zugekehrten Seitenschenkel (24) der Befestigungsteile (20) einen Anschlagabschnitt (25) aufweisen, der bei eingestecktem und/oder eingerastetem Befestigungsteil (20) an der Stirnseite des Befestigungsflansches (16, 17) anschlägt und die Einsteck- und/oder Einrastbewegung beendet.

6. Sammelschienensystem nach Anspruch 5,
**dadurch gekennzeichnet,**
**dass** die eingesteckten und/oder eingerasteten Befestigungsteile (20) mit einem Anlageschenkel (21) an den Außenseiten der Seitenschenkel (12, 13) der Grundplatte (11) anliegen und
**dass** der Anlageschenkel (21) die Seitenschenkel (22, 23) des Befestigungsteils (20) miteinander verbindet.

7. Sammelschienensystem nach Anspruch 5 und 6,
**dadurch gekennzeichnet,**
**dass** die Anschlagabschnitte (25) der Befestigungsteile (20) in Verlängerungsabschnitte (26) übergehen, die sich an die Befestigungsflansche (16, 17) der Grundplatte (11) anschließen und mit deren äußeren Befestigungsseite bündig abschließen.

8. Sammelschienensystem nach einem der Ansprüche 1 bis 7,
**dadurch gekennzeichnet,**
**dass** die Halteflansche (14, 15) der Grundplatte (11) mit den verbundenen Seitenschenkel (22) der Befestigungsteile (20) als Gegen-Steck- und/oder als Gegen-Rastelemente für die Steck- und/oder Rastaufnahmen (32, 34) der Abdeckungen (30) und/oder Adapter ausgelegt sind.

## Claims

1. A bus bar system comprising an assembly unit (10) having a base plate (11) with lateral legs (12, 13) and fastening elements (20) connected with said assembly unit (10), the assembly unit (10) forming a receiver for bus bar holders and bus bars covered by covers (30) and/or adapters for peripheral devices, wherein said covers (30) and/or adapters are mechanically connected with said assembly unit (10) by plug-in and/or snap-in receivers (32, 34) and said adapters in addition are electrically connected with said bus bars,
**characterized in that**
said assembly unit (10) forms snap-in receivers of spaced holding flanges (14, 15) extending away from an exterior of each of said lateral legs (12, 13) and fastening flanges (16, 17) into which bow-shaped fastening elements (20) can be plugged-in and/or snapped-in, wherein said plug-in and/or snap-in receivers (32, 34) of said covers and/or adapters receive said holding flanges (14, 15) and the lateral legs (22) of said bow-shaped fastening elements (20) connected therewith.

2. The bus bar system of claim 1, **characterized in that** the lateral legs (23) of said fastening elements (20) facing said fastening flanges (16, 17) of said base plate (11) have a snap-in protrusion (24) which snaps into a snap-in receiver (16', 17') of the adjoining top of said fastening flange (16, 17) of said base plate.

3. The bus bar system of claim 2, **characterized in that** said snap-in protrusion (24) has a thickness which continuously increases in a plug-in and/or snap-in direction and snaps into a snap-in receiver (16, 17) in the facing top of said fastening flange (16, 17) of said base plate (11).

4. The bus bar system of any of claims 1 to 3, **characterized in that** said holding flanges (14, 15) which are spaced apart from said base plate (11) have snap-in legs (18) on free ends oriented towards said base plate (11), which on the side facing one of the exteriors of said lateral legs (12, 13) comprise plug-in receivers (19) for ends of said lateral legs (22) of said fastening elements (20) formed as plug-in tips (27).

5. The bus bar system of any of claims 1 to 4, **characterized in that** said lateral legs (23) of said fastening elements (20) facing said fastening flanges (16, 17) of said base plate (11) have a contact section (25) which contacts the front face of said fastening flange (16, 17) and terminates the plug-in and/or snap-in movement.

6. The bus bar system of claim 5, **characterized in that** said plugged-in and/or snapped-in fastening elements (20) rest with a contact leg (21) against the exteriors of said lateral legs (12, 13) of said base plate (11) and said contact leg (21) connects said lateral legs (22, 23) of said fastening element (20).

7. The bus bar system of claim 5 and 6, **characterized in that** said contact section (25) of said fastening elements (20) transition into extended sections (26) which adjoin said fastening flanges (16, 17) of said base plate (11) and terminate flush with an outer fastening side of said base plate.

8. The bus bar system of any of claims 1 to 7, **characterized in that** said holding flanges (14, 15) of said base plate (11) with connected lateral legs (22) of said fastening elements (20) are formed as counter-plug-in and/or counter-snap-in elements for said plug-in and/or snap-in receivers (32, 34) of said covers (30) and/or adapters.

## Revendications

1. Système à barres omnibus, comportant une unité de montage (10), formée par une plaque de base (11) avec des branches latérales (12, 13), et des pièces de fixation (20), qui sont reliées à l'unité de montage (10), ladite unité de montage (10) formant un logement pour un porte-barres et des barres omnibus, lesquels sont masqués par des couvercles (30) et/ou des adaptateurs pour appareils de raccordement, lesdits couvercles (30) et/ou lesdits adaptateurs étant assemblés mécaniquement à l'unité de montage (10) au moyen de logements d'enfichage et/ou d'encliquetage (32, 34), et les adaptateurs étant reliés en plus électriquement aux barres omnibus, **caractérisé en ce que**
l'unité de montage (10) avec des brides de retenue (14, 15) et des brides de fixation (16, 17), situées à distance les unes des autres, en saillie sur les faces extérieures des branches latérales (12, 13), forme des logements d'encliquetage, dans lesquels peuvent être enfichées et/ou encliquetées des pièces de fixation (20) en forme d'étriers, les logements d'enfichage et/ou d'encliquetage (32, 34) des couvercles et/ou des adaptateurs (30) recevant les brides de retenue (14, 15) et les branches latérales (22), reliées à celles-ci, des pièces de fixation (20) en forme d'étriers.

2. Système à barres omnibus selon la revendication 1, **caractérisé en ce que** les branches latérales (23), orientées vers les brides de fixation (16, 17) de la plaque de montage (11), des pièces de fixation (20) portent une dent d'encliquetage (24) qui s'engage dans un logement d'encliquetage (16', 17') de la face supérieure en appui de la bride de fixation (16, 17) de la plaque de base (11).

3. Système à barres omnibus selon la revendication 2, **caractérisé en ce que** la dent d'encliquetage (24), au niveau de la branche latérale (23) de la pièce de fixation (20), possède une épaisseur croissante en continu dans le sens d'enfichage et/ou d'encliquetage, et s'engage dans un logement d'encliquetage (16', 17'), ayant une profondeur décroissante dans ledit sens, dans la face supérieure, orientée vers ladite dent, de la bride de fixation (16, 17) de la plaque de base (11).

4. Système à barres omnibus selon l'une quelconque des revendications 1 à 3, **caractérisé en ce que** les brides de retenue (14, 15), situées à distance de la plaque de base (11), comportent au niveau de leurs extrémités libres des branches d'encliquetage (18), qui sont orientées vers la plaque de base (11) et qui, sur les faces orientées vers les faces extérieures des branches latérales (12, 13), sont munies de logements d'enfichage (19) pour les extrémités en forme de pointes d'enfichage (27) des branches latérales (22) des pièces de fixation (20).

5. Système à barres omnibus selon l'une quelconque des revendications 1 à 4, **caractérisé en ce que** les branches latérales (24), orientées vers les brides de fixation (16, 17) de la plaque de base (11), des pièces de fixation (20) comportent un segment de butée (25) qui, lorsque la pièce de fixation (20) est enfichée et/ou encliquetée, vient buter contre la face frontale de la bride de fixation (16, 17) et arrête le mouvement d'enfichage et/ou d'encliquetage.

6. Système à barres omnibus selon la revendication 5, **caractérisé en ce que** les pièces de fixation (20) enfichées et/ou encliquetées sont en appui avec une branche d'appui (21) contre les faces extérieures des branches latérales (12, 13) de la plaque de base (11), et **en ce que** la branche d'appui (21) relie entre elles les branches latérales (22, 23) de la pièce de fixation (20).

7. Système à barres omnibus selon les revendications 5 et 6, **caractérisé en ce que** les segments de butée (25) des pièces de fixation (20) sont prolongés par des prolongements (26), qui sont adjacents aux brides de fixation (16, 17) de la plaque de base (11) et sont situés à fleur de la face extérieure de ces dernières.

8. Système à barres omnibus selon l'une quelconque des revendications 1 à 7, **caractérisé en ce que** les brides de retenue (14, 15) de la plaque de base (11) avec les branches latérales (22) assemblées des pièces de fixation (20) sont réalisées sous la forme d'éléments complémentaires d'enfichage et/ou d'éléments complémentaires d'encliquetage pour les logements d'enfichage et/ou d'encliquetage (32, 34) des couvercles (30) et/ou des adaptateurs.
